# EUROPÄISCHE PATENTSCHRIFT

(11) **EP 2 704 899 B1**
(45) Veröffentlichungstag und Bekanntmachung des Hinweises auf die Patenterteilung: **01.07.2020**
(21) Anmeldenummer: 12709866.3
(22) Anmeldetag: 16.03.2012
(51) Int. Cl.: B41J 11/00

(54) **VERFAHREN ZUM BEDRUCKEN VON ZUMINDEST EINER VERPACKUNG**
METHOD FOR PRINTING A PACKAGING
PROCEDE D'IMPRESSION D'UN EMBALLAGE

(30) Priorität: 06.05.2011 DE 102011075386
(43) Veröffentlichungstag der Anmeldung: 12.03.2014
(73) Patentinhaber: Robert Bosch GmbH, 70442 Stuttgart (DE)
(72) Erfinder: MUELLER, Asmus, CH-2544 Bettlach (CH); BOLLI, Gerhard, CH-8572 Andhausen (CH)
(86) Internationale Anmeldenummer: PCT/EP2012/054628
(87) Internationale Veröffentlichungsnummer: WO 2012/152481

(56) Entgegenhaltungen:
- EP-A2- 1 847 397
- US-A1- 2007 206 038
- US-A1- 2010 253 721

## Beschreibung

### Stand der Technik

Es ist bereits ein Verfahren zum Bedrucken von zumindest einem Trägerelement, das zumindest einen Bedruckungsvorgang umfasst, bekannt.

Aus der US 2007/0206038 A1 und der US 2010/0253721 A1 geht jeweils ein Verfahren zum Bedrucken eines Trägerelements hervor. Bei der US 2007/206038 A1 wird die Lage des Trägerelements sensiert und in Abhängigkeit davon ein Druckbild entsprechend ausgerichtet. Die US 2010/253721 A1 beschreibt, wie die Lage des Trägerelements über darauf angebrachte Referenzmarken, die detektiert werden, bestimmt wird und anhand der ermittelten Trägerelementlage das Trägerelement entsprechend ausgerichtet wird.

### Offenbarung der Erfindung

Es wird ein Verfahren gemäß dem unabhängigen Anspruch 1 und eine Druckvorrichtung gemäß dem unabhängigen Anspruch 7 vorgeschlagen. Demnach wird ein Verfahren zum Bedrucken von zumindest einer Verpackung vorgeschlagen, das zumindest einen Bedruckungsvorgang umfasst, wobei in einem Schritt eine Lage der zumindest einen Verpackung sensiert wird, in einem weiteren Schritt eine Ausrichtung zumindest einer Information in Abhängigkeit von der sensierten Lage der zumindest einen Verpackung durchgeführt wird, wobei die zumindest eine Information in zumindest einer Datei gespeichert ist und in zumindest einem weiteren Schritt zumindest eine Information auf die Verpackung aufgedruckt wird.

Unter einem "Trägerelement" soll in diesem Zusammenhang insbesondere ein Element verstanden werden, das dazu vorgesehen ist, bedruckt zu werden. Unter "vorgesehen" soll in diesem Zusammenhang insbesondere "speziell ausgelegt", "speziell ausgestaltet" und/oder "speziell ausgestattet" verstanden werden. Gemäß der Erfindung ist das Trägerelement als Verpackung ausgebildet. Das Trägerelement ist vorzugsweise zumindest teilweise aus Pappe, Papier und/oder Karton ausgebildet. Dadurch kann eine vorteilhaft gute Bedruckbarkeit des Trägerelements erreicht werden. Unter einer "Lage" des Trägerelements soll in diesem Zusammenhang insbesondere eine Position des

Trägerelements verstanden werden, die das Trägerelement in einer Vorrichtung, die dazu vorgesehen ist, das Trägerelement zu bedrucken, aufweist. Stimmt die Lage des Trägerelements nicht mit einer vorgegebenen Soll-Position des Trägerelements überein, so kann eine bevorzugte Genauigkeit des Druckvorgangs und somit des entstehenden Druckbilds nicht gewährleistet werden. Die Soll-Position kann vorzugsweise von einer Recheneinheit der Vorrichtung vorgegeben werden.

Durch eine Ausrichtung der zumindest einen Information kann eine Abweichung der Lage des Trägerelements von der Soll-Position vorteilhaft einfach kompensiert und ein bevorzugt präzises Bedruckungsergebnis erreicht werden. Dabei soll unter einer "Ausrichtung" in diesem Zusammenhang insbesondere ein Vorgang verstanden werden, bei dem eine Position der zumindest einen Information verändert wird. Vorzugsweise wird die Position der zumindest einen Information so verändert, dass die Abweichung der Lage des Trägerelements von der Soll-Position zumindest im Wesentlichen kompensiert bzw. ausgeglichen wird. In einem besonders bevorzugten Ausführungsbeispiel wird die Position der zumindest einen Information in der Datei, in der die zumindest eine Information gespeichert ist, verändert.

Es wird zudem vorgeschlagen, dass die Ausrichtung der zumindest einen Information durch eine Anpassung einer Position der zumindest einen Information in der Datei durchgeführt wird.

Dadurch kann insbesondere bei Trägerelementen, die eine große Flächenausdehnung und/oder ein hohes Gewicht aufweisen, auf vorteilhaft einfache Weise eine präzise Bedruckung erreicht werden.

Alternativ ist es auch denkbar, das Trägerelement und/oder der zumindest eine Teil der Bedruckungseinheit in Abhängigkeit von der sensierten Lage des zumindest einen Trägerelements zu verschieben, sodass die Abweichung der Lage des Trägerelements von der Soll-Position vorteilhaft einfach kompensiert wird.

Die Lage des zumindest einen Trägerelements kann direkt und/oder indirekt sensiert werden. Unter "direkt" soll in diesem Zusammenhang insbesondere verstanden werden, dass die Lage des zumindest einen Trägerelements selbst und vollständig in einem einzigen Schritt erkannt und ausgewertet werden kann. Unter "indirekt" soll in diesem Zusammenhang insbesondere verstanden werden, dass in zumindest einem Schritt eine Lage eines weiteren Elements, welches vorzugs-weise fest mit dem Trägerelement verbunden ist, und/oder eines Teilbereichs des Trägerelements erkannt wird und in zumindest einem weiteren Schritt anhand dessen auf die Lage des Trägerelements geschlossen werden kann.

Unter einer "Information" soll in diesem Zusammenhang insbesondere ein Merkmal verstanden werden, das insbesondere einen Benutzer vorzugsweise auf produktspezifische Eigenschaften eines Produktes hinweist. Die Information kann von einer herstellerabhängigen oder herstellerunabhängigen Artikelbezeichnung, von Benutzungs- und Gefahrenhinweisen, von einem Herstellerlogo und/oder von weiteren, einem Fachmann als sinnvoll erscheinenden Merkmalen gebildet sein.

Das Verfahren kann so vorgesehen sein, dass jeweils ein Trägerelement bedruckt wird. In einem besonders bevorzugten Ausführungsbeispiel ist das Verfahren so ausgestaltet, dass zumindest zwei Trägerelemente zeitgleich in einem einzigen Druckvorgang bedruckt werden können. Dadurch kann eine vorteilhaft niedrige Bearbeitungszeit der Trägerelemente erreicht werden.

Durch das erfindungsgemäße Verfahren kann ein vorteilhaft präzises Bedruckungsergebnis erreicht werden. Dadurch können Trägerelemente verwendet werden, die vorzugsweise einheitlich ausgestaltet sind und freie Bereiche aufweisen, in die zumindest eine Information mittels des Verfahrens aufgedruckt werden kann. Die Information kann insbesondere dazu vorgesehen sein, zumindest eines der Trägerelemente zu individualisieren bzw. eindeutig von zumindest einem an-deren der Trägerelemente zu unterscheiden. Dadurch können vorteilhaft Kosten eingespart werden. Zudem kann eine vorteilhaft kurze Herstellzeit eines Trägerelements erreicht werden. Erfindungsgemäß bilden die nach dem erfindungsgemäßen Verfahren bedruckten Trägerelemente eine Verpackung insbesondere eines Einsatzwerkzeugs für Handwerkzeugmaschinen. In einem besonders bevorzugten Ausführungsbeispiel ist das Trägerelement dazu vorgesehen, in einem montierten Zustand eine Faltschachtel zu bilden. Es sind aber auch andere Ausgestaltungen und Verwendungen der nach dem erfindungsgemäßen Verfahren bedruckten Trägerelemente, die einem Fachmann als sinnvoll erscheinen, denkbar.

Des Weiteren wird vorgeschlagen, dass eine Lage zumindest eines Referenzelements ermittelt und die Ausrichtung der zumindest einen Information zumindest im Wesentlichen anhand der ermittelten Lage des zumindest einen Referenzelements durchgeführt wird. Unter einem "Referenzelement" soll in diesem Zusammenhang insbesondere ein Element verstanden werden, dass einen festen Bezugspunkt des Trägerelements bildet und anhand dessen Lage auf die Lage des Trägerelements rückgeschlossen werden kann. In einem besonders bevorzugten Ausführungsbeispiel ist der Referenzpunkt maschinell lesbar ausgestaltet. Das Referenzelement ist vorzugsweise auf das Trägerelement aufgebracht, bevor das Trägerelement nach dem erfindungsgemäßen Verfahren bedruckt wird. Das Referenzelement kann auf das Trägerelement aufgeklebt, aufgedruckt, eingepresst oder auf eine andere, einem Fachmann als sinnvoll erscheinende Weise aufgebracht sein. In einem besonders bevorzugten Ausführungsbeispiel kann eine Recheneinheit vorgesehen sein, die dazu vorgesehen ist, die Lage des Trägerelements anhand der sensierten Lage des zumindest einen Referenzelements mittels eines hinterlegten Berechnungsalgorithmus zu berechnen.

Dadurch kann eine vorteilhaft einfache und schnelle, insbesondere maschinelle Erkennung der Lage des Trägerelements erreicht werden, wodurch ein bevorzugt geringer Zeit- und Kostenaufwand erreicht werden kann.

Ferner wird vorgeschlagen, dass die Lage des zumindest einen Referenzelements des Trägerelements zumindest im Wesentlichen maschinell ermittelt wird. Unter "maschinell" soll in diesem Zusammenhang insbesondere verstanden werden, dass die Lage des zumindest einen Trägerelements ohne ein menschliches Eingreifen und vorzugsweise selbsttätig erkannt bzw. sensiert wird. Dies kann vorzugsweise mittels zumindest eines Sensors erreicht werden. Der Sensor kann insbesondere mechanisch, magnetisch, elektronisch und/oder optisch ausgestaltet sein.

Dadurch kann eine vorteilhaft einfache und bevorzugt präzise Erkennung der Lage des Trägerelements erreicht werden. Zudem können dadurch vorteilhaft Arbeitskräfte eingespart und somit bevorzugt geringe Kosten erreicht werden.

Des Weiteren wird vorgeschlagen, dass anhand der Lage des zumindest einen Referenzelements des Trägerelements der Bedruckungsvorgang zumindest im Wesentlichen maschinell beeinflusst wird, sodass die zumindest eine Information zumindest im Wesentlichen passgenau in zumindest einen freien Bereich des Trägerelements gedruckt werden kann. Unter "zumindest im Wesentlichen passgenau" soll in diesem Zusammenhang insbesondere eine Abweichung von einer Idealposition verstanden werden, die insbesondere kleiner als 10 mm, vorzugsweise kleiner als 5 mm und besonders bevorzugt kleiner als 3 mm ist. In einem besonders bevorzugten Ausführungsbeispiel weist die Abweichung weniger als 1 mm auf.

Dadurch kann ein bevorzugt präzises Bedruckungsergebnis erreicht werden, wodurch ein qualitativ hochwertiges Erscheinungsbild des Trägerelements, welches nach dem erfindungsgemäßen Verfahren bedruckt wurde, erreicht werden kann.

Zudem wird vorgeschlagen, dass eine Datei, die die zumindest eine Information, die auf das Trägerelement aufgedruckt wird, umfasst, durch Online-Rippen für einen Bedruckungsvorgang zur Verfügung gestellt wird. Unter "Online-Rippen" soll in diesem Zusammenhang insbesondere ein Verfahren verstanden werden, bei dem eine Datei, die zumindest eine Grafik umfasst, welche die zumindest eine Information bildet, in für die Bedruckungseinheit lesbare Signale umgewandelt werden, wobei eine Übertragung der Signale direkt an die Bedruckungseinheit übertragen werden, d.h. ohne dass die Signale in einem Datenspeicher zwischengespeichert werden. Dadurch kann der Druckvorgang, und somit das erfindungsgemäße Verfahren, vorteilhaft schnell und einfach ausgestaltet werden.

Ferner wird vorgeschlagen, dass anhand des zumindest einen Referenzelements eine Datei, die die zumindest eine Information umfasst, aus zumindest zwei Dateien, die jeweils unterschiedliche Informationen umfassen, zumindest im Wesentlichen maschinell ausgewählt wird. Diese Unterscheidung kann durch verschiedene Positionierungen und/oder durch verschiedene Formen der Referenzelemente der unterschiedlichen Trägerelemente erreicht werden. Dadurch kann das Verfahren vorteilhaft flexibel, einfach und bedienerfreundlich ausgestaltet werden.

Ferner wird ein nicht zur Erfindung gehörendes Trägerelement vorgeschlagen, das dazu vorgesehen ist, mittels des erfindungsgemäßen Verfahrens bedruckt zu werden. In einem besonders bevorzugten Ausführungsbeispiel bildet das Trägerelement zumindest teilweise eine Verpackung und/oder ein Etikett insbesondere eines Einsatzwerkzeugs. Das Trägerelement ist vorzugsweise zumindest teilweise aus Pappe, Papier und/oder Karton ausgebildet. Dadurch kann eine vorteilhaft gute Bedruckbarkeit des Trägerelements erreicht werden. Zudem können vorteilhaft geringe Kosten erreicht werden. Es ist auch denkbar, das Trägerelement aus einem Kunststoff auszubilden. Dadurch kann das Trägerelement vorteilhaft robust ausgestaltet werden.

Zudem wird vorgeschlagen, dass das Trägerelement zumindest ein Referenzelement aufweist, das dazu vorgesehen ist, von zumindest einem Sensor sensiert zu werden. Durch das zumindest eine von einem Sensor erkennbare Referenzelement des Trägerelements kann eine vorteilhaft einfache, schnelle und selbsttätige Bedruckung des Trägerelements mittels des erfindungsgemäßen Verfahrens erreicht werden.

Des Weiteren wird eine Druckvorrichtung, die dazu vorgesehen ist, die zumindest eine Verpackung mittels des Verfahrens zu bedrucken, vorgeschlagen, mit zumindest einer Bedruckungseinheit, die zumindest ein Bedruckungselement umfasst, mit zumindest einem Sensor zum Detektieren einer Position der Verpackung mit zumindest einer Rechnereinheit, mit zumindest einem Bedruckungselement und mit zumindest einer Ausrichteeinheit, die dazu vorgesehen ist, eine Ausrichtung zumindest einer Information durchzuführen.

Zudem wird vorgeschlagen, dass der zumindest eine Sensor zumindest einen optischen Sensor umfasst.

Ferner wird vorgeschlagen, dass der zumindest eine optische Sensor eine Kamera umfasst. Dadurch kann die Vorrichtung vorteilhaft präzise und kostengünstig ausgestaltet werden.

Zudem wird vorgeschlagen, dass die zumindest eine Recheneinheit dazu vorgesehen ist, eine Lage des Trägerelements anhand einer Lage zumindest eines Referenzelements des Trägerelements zu berechnen. In einem besonders bevorzugten Ausführungsbeispiel ist die Recheneinheit dazu vorgesehen, die Lage des Trägerelements anhand der sensierten Lage des zumindest einen Referenzelements mittels eines hinterlegten Berechnungsalgorithmus zu berechnen.

Dadurch kann eine vorteilhaft einfache und schnelle, insbesondere maschinelle Erkennung der Lage des Trägerelements erreicht werden, wodurch ein bevorzugt geringer Zeit- und Kostenaufwand erreicht werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Vorrichtung in einer schematischen Darstellung,
- Fig. 2: ein erfindungsgemäßes Trägerelement vor einer Anwendung eines erfindungsgemäßen Verfahrens in einer Draufsicht und
- Fig. 3: ein mit dem erfindungsgemäßen Verfahren bedrucktes Trägerelement in einer Draufsicht.

### Beschreibung des Ausführungsbeispiels

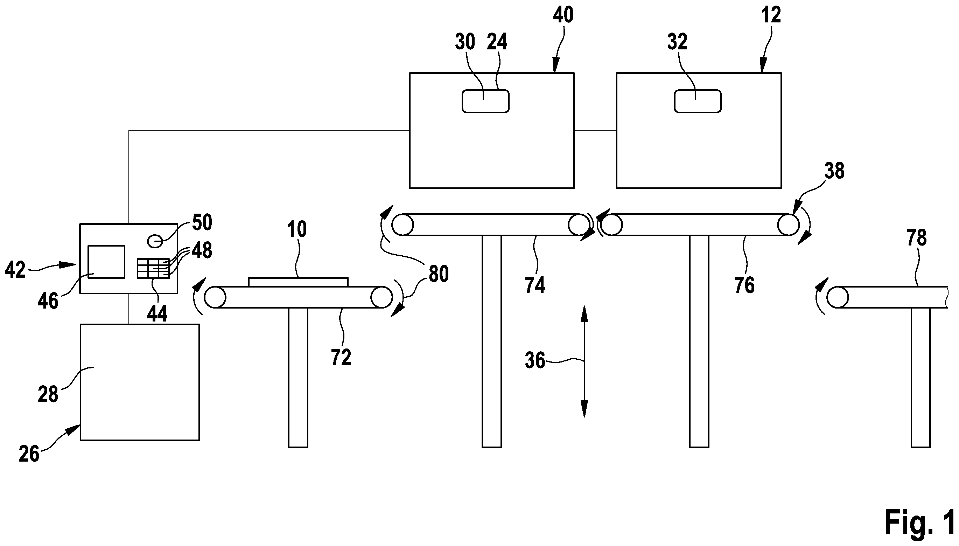

In Figur 1 ist eine Vorrichtung dargestellt. Die Vorrichtung ist als Druckvorrichtung ausgebildet. Die Vorrichtung ist dazu vorgesehen, Trägerelemente 10 mit Informationen 14, 16, 18, 20 zu bedrucken.

Die Vorrichtung weist eine Zuführ- und Transporteinheit 38 auf. Die Zuführ- und Transporteinheit 38 weist vier Transportelemente 72, 74, 76, 78 auf. Die Transportelemente 72, 74, 76, 78 sind von Transportbändern gebildet. Zudem kann die Zuführ- und Transporteinheit einen nicht dargestellten Einlagestapel aufweisen, der dazu vorgesehen ist, zumindest einen Stapel von Trägerelementen aufzunehmen. Die Transportelemente 72, 74, 76, 78 sind jeweils in Vertikalrichtung 36 höhenverstellbar ausgebildet. Die Zuführ- und Transporteinheit 38 ist dazu vorgesehen, Trägerelemente 10 innerhalb der Vorrichtung während eines Bearbeitungsprozesses zu halten und zu führen. Ein Trägerelement 10 wird dabei auf das erste Transportelement 72 aufgelegt und in Transportrichtung 80 des Transportelements 72 zu dem zweiten Transportelement 74 hin geführt. Das erste Transportelement 72 wird in Vertikalrichtung 36 so verschoben, dass das erste Transportelement 72 und das zweite Transportelement 74 in Vertikalrichtung 36 betrachtet auf einer gleichen Höhe sind. Anschließend wird das Trägerelement 10 von dem ersten Transportelement 72 an das zweite Transportelement 74 übergeben.

Auf dem zweiten Transportelement 74 bleibt das Trägerelement 10, in Vertikalrichtung 36 betrachtet, unter einer Sensoreinheit 40 liegen. Die Sensoreinheit 40 umfasst einen Sensor 24. Der Sensor 24 ist umfasst einen optischen Sensor. Der optische Sensor ist von einer Kamera 30 gebildet. Der Sensor 24 ist dazu vorgesehen, während eines Bedruckungsvorgangs Referenzelemente 22 des zu bedruckenden Trägerelements 10 zu erkennen. Der Sensor 24 ist dazu vorgesehen, eine Lage der Referenzelemente 22 des zu bedruckenden Trägerelements 10 zu detektieren. Der Sensor 24 ist dazu vorgesehen, die Lage der Referenzelemente 22 des zu bedruckenden Trägerelements 10 in einer graphischen Form aufzunehmen und in elektrische Signale umzuwandeln. Der Sensor 24 übermittelt die elektrischen Signale an eine Recheneinheit 26.

Die Recheneinheit 26 ist dazu vorgesehen, die elektrischen Signale des Sensors 24 auszuwerten. Die Recheneinheit 26 ist dazu vorgesehen, eine Lage des Trägerelements 10 anhand der sensierten Lage der Referenzelemente 22 des Trägerelements 10, welche der Recheneinheit 26 als elektrische Signale zur Verfügung stehen, zu berechnen. Hierzu ist in der Recheneinheit 26 ein Berechnungsalgorithmus hinterlegt. Die Recheneinheit 26 vergleicht die ermittelte Lage des Trägerelements 10 mit einer vorgegebenen Soll-Position des Trägerelements 10.

Die Recheneinheit umfasst eine Ausrichteeinheit 28. Weicht die Lage des Trägerelements 10 von der Soll-Position ab, erzeugt die Ausrichteeinheit 28 ein elektrisches Signal. Die Ausrichteeinheit 28 ist dazu vorgesehen, abhängig von dem Ausgangssignal der Recheneinheit 26 eine Ausrichtung der Informationen 14, 16, 18, 20 zu beeinflussen. Das elektrische Signal veranlasst eine Ausrichtung zumindest einer Information 14, 16, 18, 20 in Abhängigkeit von der sensierten Lage des Trägerelements 10. Es ist eine Datei vorgesehen, die die zumindest eine Information 14, 16, 18, 20 umfasst. Es sind vier unterschiedliche Gruppen von Informationen 14, 16, 18, 20 vorgesehen. Bei der Ausrichtung der Informationen 14, 16, 18, 20 wird die Datei verändert. Durch eine Anpassung der Ausrichtung der Informationen 14, 16, 18, 20 wird eine Abweichung der Lage des Trägerelements 10 von der vorgegebenen Soll-Position ausgeglichen.

Die Recheneinheit 26 ist dazu vorgesehen, die Informationen 14, 16, 18, 20 als Graphik für den Bedruckungsvorgang bereitzustellen. Die Graphik wird als Bild- oder als Textdatei zur Verfügung gestellt. Die Datei wird an die Vorrichtung weitergeleitet.

Die Vorrichtung weist zudem eine schematisch dargestellte Bedruckungseinheit 12 auf. Die Bedruckungseinheit 12 ist als Tintentstrahlbedruckungseinheit ausgebildet. Die Bedruckungseinheit 12 umfasst ein Bedruckungselement 32. Das Bedruckungselement 32 ist als Druckkopf ausgebildet. Das Bedruckungselement 32 ist dazu vorgesehen, während eines Druckvorgangs in einem direkten Kontakt mit einer Oberfläche 34 des Trägerelements 10 zu stehen. Dabei überträgt das Bedruckungselement 32 die Informationen 14, 16, 18, 20 auf das Trägerelement 10.

Nachdem die Lage des Trägerelements 10 von dem Sensor 24 der Sensoreinheit 40 erfasst wurde, wird das Trägerelement 10 von dem zweiten Transportelement 74 senkrecht zur Vertikalrichtung 36 zu dem dritten Transportelement 76 hin transportiert. Das zweite Transportelement 74 wird in Vertikalrichtung 36 so verschoben, dass das zweite Transportelement 74 und das dritte Transportelement 76 in Vertikalrichtung 36 betrachtet auf einer gleichen Höhe sind. Anschließend wird das Trägerelement 10 von dem zweiten Transportelement 74 an das dritte Transportelement 76 übergeben.

Auf dem dritten Transportelement 76 bleibt das Trägerelement 10, in Vertikalrichtung 36 betrachtet, unter der Bedruckungseinheit 12 der Vorrichtung liegen. Das Trägerelement 10 wird nun von dem Bedruckungselement 32 der Bedruckungseinheit 12 mit den Informationen 14, 16, 18, 20, deren Position auf die des Trägerelements 10 ausgerichtet sind, bedruckt.

Nachdem das Trägerelement 10 von dem Bedruckungselement 32 der Bedruckungseinheit 12 bedruckt wurde, wird das Trägerelement 10 von dem dritten Transportelement 76 senkrecht zur Vertikalrichtung 36 zu dem vierten Transportelement 78 hin transportiert. Das dritte Transportelement 76 wird in Vertikalrichtung 36 so verschoben, dass das dritte Transportelement 76 und das vierte Transportelement 78 in Vertikalrichtung 36 betrachtet auf einer gleichen Höhe sind. Anschließend wird das Trägerelement 10 von dem dritten Transportelement 76 an das vierte Transportelement 78 übergeben. Ein Bediener der Vorrichtung kann das bedruckte Trägerelement 10 dann von dem vierten Transportelement 78 der Zuführ- und Transporteinheit 38 entnehmen.

Zudem weist die Vorrichtung eine Bedieneinheit 42 auf. Die Bedieneinheit 42 umfasst ein Eingabefeld 44 und ein Display 46. Das Display 46 ist dazu vorgesehen, einen Bediener über einen Zustand eines Druckvorgangs zu informieren. Über das Eingabefeld 44 kann ein Bediener die Vorrichtung und den Druckvorgang steuern und Einstellungen vornehmen. Das Eingabefeld 44 weist mehrere Tasten 48 auf. Zudem weist die Vorrichtung einen Not-Aus-Schalter 50 auf. Der Not-Aus-Schalter 50 ist neben der Bedieneinheit 42 angeordnet.

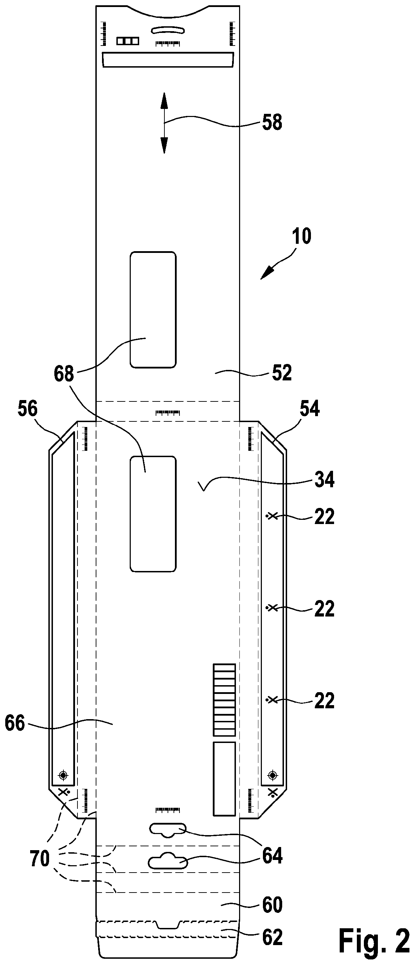

In Figur 2 ist das erfindungsgemäße Trägerelement 10 in einem Zustand dargestellt, in dem das Trägerelement 10 noch nicht mittels des erfindungsgemäßen Verfahrens bedruckt wurde. Das Trägerelement 10 ist aus Karton ausgebildet. Das Trägerelement 10 ist als eine Verpackung ausgebildet. Das Trägerelement 10 weist einen Grundkörper 52 auf. Der Grundkörper 52 weist zwei seitliche Laschen 54, 56 auf. Die Laschen 54, 56 sind in einer Haupterstreckungsrichtung 58 des Trägerelements 10 entlang Seiten des Grundkörpers 52 angeordnet. Eine der zwei Laschen 54 weist vier Referenzelemente 22 auf. Die andere Lasche 56 weist ein Referenzelement 22 auf. Die Referenzelemente 22 sind jeweils von einem Kreuz gebildet. Jedes Referenzelement 22 weist zudem einen Punkt auf. Die Referenzelemente 22 sind von dem Sensor 24 lesbar ausgestaltet.

Der Grundkörper 52 weist zudem eine weitere Lasche 60 auf. Die weitere Lasche 60 ist senkrecht zur Haupterstreckungsrichtung 58 des Trägerelements 10 an einer Kopfseite des Grundkörpers 52 angeordnet. Die weitere Lasche 60 umfasst ein Aufreißelement 62. Zudem umfasst die weitere Lasche 60 ein Aufhängeelement 64 auf.

Der Grundkörper 52 umfasst zudem einen Informationsbereich 66. Der Informationsbereich 66 ist dazu vorgesehen, mit Informationen 14, 16, 18, 20 mittels des erfindungsgemäßen Verfahrens bedruckt zu werden. Der Grundkörper 52 weist ferner ein zwei Fensterelemente 68 auf. Eines der zwei Fensterelemente 68 ist von dem Informationsbereich 66 umschlossen.

Des Weiteren weist der Grundkörper 52 Faltelemente 70 auf. Die Faltelemente 70 sind von geraden Linien gebildet. Die Faltelemente 70 sind dazu vorgesehen, den Grundkörper 52 nach dem Bedruckungsvorgang bei einem Faltvorgang entlang dieser Faltelemente 70 zu falten.

Das Trägerelement 10 ist als Zuschnitt einer Faltschachtel ausgebildet. Die Faltschachtel ist dazu vorgesehen, in einem gefalteten Zustand Kleinteile aufzunehmen. Die Kleinteile können von Schrauben, Muttern, Schleifblättern, Schleifpapierzuschnitten, Nägeln oder anderen, einem Fachmann als sinnvoll erscheinenden Kleinteilen gebildet sein. Die Kleinteile werden in der gefalteten Faltschachtel verkauft.

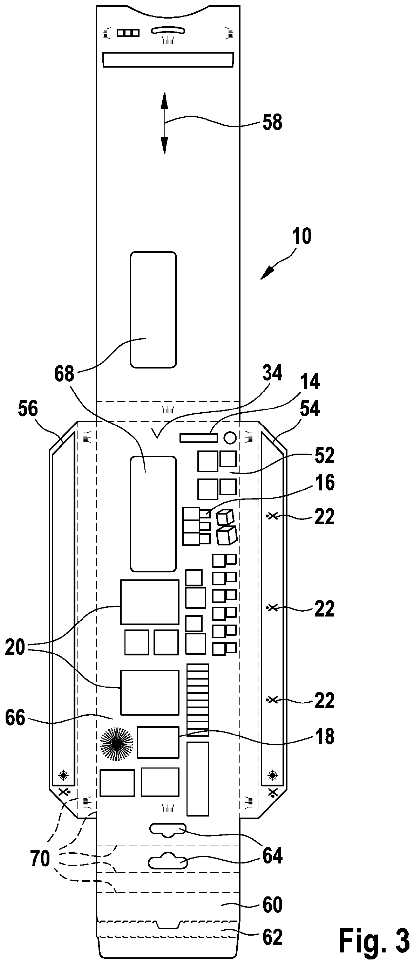

In Figur 3 ist das Trägerelement 10 in einem bedruckten Zustand dargestellt. Der Informationsbereich 66 ist mit einer ersten Information 14, die von einem Herstellerlogo gebildet ist, bedruckt. Das Herstellerlogo weist einen Benutzer auf einen Hersteller der in der Faltschachtel beinhalteten Kleinteile hin. Ferner umfasst der Informationsbereich 66 eine weitere, von produktspezifischen Angaben gebildete Information 16 zu den später in der Faltschachtel beinhalteten Kleinteilen. Das in Figur 3 dargestellte Trägerelement 10 ist dazu vorgesehen, in einem gefalteten Zustand als Faltschachtel nicht dargestellte Schleifpapierzuschnitte aufzunehmen. Die produktspezifischen Angaben sind von einer Angabe zu einer Körnung, zu Anwendungsgebieten, zu geeigneten Handwerkzeugmaschinen und Materialien, für die die Schleifpapierzuschnitte geeignet sind, gebildet. Zudem weist der Informationsbereich 66 eine weitere Information 18, die von Bildern von einer Anwendung der in der Faltschachtel beinhalteten Kleinteile gebildet ist, auf. Ferner ist eine weitere, von maschinenlesbaren EAN-Codes gebildete Information 20 in dem Informationsbereich 66 aufgedruckt.

In einem gefalteten Zustand des Trägerelements 10 ist auf den beiden seitlichen Laschen 54, 56 und auf der weiteren Lasche 60 ein Klebstoff aufgebracht und mit dem Grundkörper 52 des Trägerelements 10 verklebt. Das Aufhängeelement 64 ist dazu vorgesehen, die Faltschachtel beispielsweise in einem Verkaufsraum aufzuhängen. Die zwei Fensterelemente 68 sind in einem gefalteten Zustand des Trägerelements 10 einander gegenüberliegend angeordnet. Durch die Fensterelemente 68 kann ein Benutzer einen Inhalt der Faltschachtel, der von Kleinteilen gebildet ist, betrachten. Das Aufreißelement 62 ist dazu vorgesehen, die Faltschachtel einfach und schnell zu öffnen.

## Patentansprüche

1. Verfahren zum Bedrucken von zumindest einer Verpackung (10), das zumindest einen Bedruckungsvorgang umfasst,
wobei in einem Schritt eine Lage der zumindest einen Verpackung (10) sensiert wird,
in einem weiteren Schritt eine Ausrichtung zumindest einer Information (14, 16, 18, 20) in Abhängigkeit von der sensierten Lage der zumindest einen Verpackung (10) durchgeführt wird, um eine Abweichung der Lage der Verpackung (10) von einer vorgegebenen Soll-Position zu kompensieren und ein präzises Bedruckungsergebnis zu erreichen, wobei eine Lage zumindest eines Referenzelements (22) der Verpackung (10) ermittelt und die Ausrichtung der zumindest einen Information (14, 16, 18, 20) zumindest im Wesentlichen anhand der ermittelten Lage des zumindest einen Referenzelements durchgeführt wird,
wobei die zumindest eine Information (14, 16, 18, 20) in zumindest einer Datei gespeichert ist,
und in zumindest einem weiteren Schritt die zumindest eine Information (14, 16, 18, 20) auf die Verpackung (10) aufgedruckt wird.

2. Verfahren nach Anspruch 1,
**dadurch gekennzeichnet,**
**dass** die Ausrichtung der zumindest einen Information (14, 16, 18, 20) durch eine Anpassung einer Position der zumindest einen Information (14, 16, 18, 20) in der Datei durchgeführt wird.

3. Verfahren nach Anspruch 1,
**dadurch gekennzeichnet,**
**dass** die Lage des zumindest einen Referenzelements (22) der Verpackung (10) zumindest im Wesentlichen maschinell ermittelt wird.

4. Verfahren zumindest nach Anspruch 1,
**dadurch gekennzeichnet,**
**dass** anhand der Lage des zumindest einen Referenzelements (22) der Verpackung (10) der Bedruckungsvorgang zumindest im Wesentlichen maschinell beeinflusst wird.

5. Verfahren nach einem der vorhergehenden Ansprüche,
**dadurch gekennzeichnet,**
**dass** die zumindest eine Datei, die die zumindest eine Information (14, 16, 18, 20), die auf die Verpackung (10) aufgedruckt wird, umfasst, durch Online-Rippen für einen Bedruckungsvorgang zur Verfügung gestellt wird.

6. Verfahren zumindest nach Anspruch 1,
**dadurch gekennzeichnet,**
**dass** anhand des zumindest einen Referenzelements (22) die Datei, die die zumindest eine Information (14, 16, 18, 20) umfasst, aus zumindest zwei Dateien, die jeweils zumindest eine unterschiedliche Information umfassen, zumindest im Wesentlichen maschinell ausgewählt wird.

7. Druckvorrichtung zur Durchführung des Verfahrens nach einem der vorhergesehenen Ansprüche,
mit zumindest einer Bedruckungseinheit (12), die zumindest ein Bedruckungselement umfasst,
mit zumindest einem Sensor (24) zum Detektieren einer Lage der Verpackung (10),
mit zumindest einer Rechnereinheit (26) und
mit zumindest einer Ausrichteeinheit (28), die dazu vorgesehen ist, eine Ausrichtung zumindest einer Information (14, 16, 18, 20) durchzuführen, um eine Abweichung der Lage der Verpackung (10) von einer vorgegebenen Soll-Position zu kompensieren und ein präzises Bedruckungsergebnis zu erreichen.

8. Vorrichtung nach Anspruch 7,
**dadurch gekennzeichnet,**
**dass** der zumindest eine Sensor (24) zumindest einen optischen Sensor umfasst.

9. Vorrichtung nach Anspruch 8,
**dadurch gekennzeichnet,**
**dass** der zumindest eine optische Sensor eine Kamera (30) umfasst.

10. Vorrichtung zumindest nach einem der Ansprüche 7 bis 9 **dadurch gekennzeichnet,**
**dass** die zumindest eine Recheneinheit (26) dazu vorgesehen ist, eine Lage der Verpackung (10) anhand einer Lage zumindest eines Referenzelements (22) der Verpackung (10) zu berechnen.

## Claims

1. Method for printing at least one packaging element (10), which comprises at least one printing operation, wherein in one step a position of the at least one packaging element (10) is sensed,
in a further step at least one piece of information (14, 16, 18, 20) is oriented on the basis of the sensed position of the at least one packaging element (10) in order to compensate for a deviation of the position of the packaging element (10) from a predefined target position and to achieve a precise printing result, wherein a position of at least one reference element (22) of the packaging element (10) is determined and the at least one piece of information (14, 16, 18, 20) is oriented at least substantially by using the determined position of the at least one reference element,
wherein the at least one piece of information (14, 16, 18, 20) is stored in at least one file,
and in at least one further step the at least one piece of information (14, 16, 18, 20) is printed onto the packaging element (10).

2. Method according to Claim 1,
**characterized in that**
the at least one piece of information (14, 16, 18, 20) is oriented by adapting a position of the at least one piece of information (14, 16, 18, 20) in the file.

3. Method according to Claim 1,
**characterized in that**
the position of the at least one reference element (22) of the packaging element (10) is determined at least substantially by machine.

4. Method at least according to Claim 1,
**characterized in that**
by using the position of the at least one reference element (22) of the packaging element (10), the printing operation is influenced at least substantially by machine.

5. Method according to one of the preceding claims,
**characterized in that**
the at least one file which comprises the at least one piece of information (14, 16, 18, 20) that is printed onto the packaging element (10) is made available via online ripping for a printing operation.

6. Method at least according to Claim 1,
**characterized in that**
by using the at least one reference element (22), the file which comprises the at least one piece of information (14, 16, 18, 20) can be chosen at least substantially by machine from at least two files which each comprise different pieces of information.

7. Printing apparatus for performing the method according to one of the preceding claims,
having at least one printing unit (12), which comprises at least one printing element,
having at least one sensor (24) for detecting a position of the packaging element (10),
having at least one computer unit (26), and
having at least one orientation unit (28) which is provided to orient at least one piece of information (14, 16, 18, 20) in order to compensate for a deviation of the position of the packaging element (10) from a predefined target position and to achieve a precise printing result.

8. Apparatus according to Claim 7,
**characterized in that**
the at least one sensor (24) comprises at least one optical sensor.

9. Apparatus according to Claim 8,
**characterized in that**
the at least one optical sensor comprises a camera (30).

10. Apparatus according to at least one of Claims 7 to 9,
**characterized in that**
the at least one computer unit (26) is provided to calculate a position of the packaging element (10) by using a position of at least one reference element (22) of the packaging element (10).

## Revendications

1. Procédé d'impression d'au moins un emballage (10), comprenant au moins une opération d'impression,
dans lequel, dans une étape, une orientation dudit au moins un emballage (10) est détectée,
dans une étape supplémentaire, un alignement d'au moins une information (14, 16, 18, 20) en fonction de l'orientation détectée dudit au moins un emballage (10) est effectué pour compenser un écart de l'orientation de l'emballage (10) par rapport à une position de consigne spécifiée et pour obtenir un résultat d'impression précis, une orientation d'au moins un élément de référence (22) de l'emballage (10) étant déterminée et l'alignement de ladite au moins une information (14, 16, 18, 20) étant effectué au moins substantiellement au moyen de l'orientation déterminée dudit au moins un élément de référence,
dans lequel ladite au moins une information (14, 16, 18, 20) est enregistrée dans au moins un fichier,
et dans au moins une étape supplémentaire, ladite au moins une information (14, 16, 18, 20) est imprimée sur l'emballage (10).

2. Procédé selon la revendication 1, **caractérisé en ce que** l'alignement de ladite au moins une information (14, 16, 18, 20) est effectué en adaptant une position de ladite au moins une information (14, 16, 18, 20) dans le fichier.

3. Procédé selon la revendication 1, **caractérisé en ce que** l'orientation dudit au moins un élément de référence (22) de l'emballage (10) est déterminée de manière au moins substantiellement automatique.

4. Procédé au moins selon la revendication 1, **caractérisé en ce que** l'orientation dudit au moins un élément de référence (22) de l'emballage (10) permet d'influencer l'opération d'impression de manière au moins substantiellement automatique.

5. Procédé selon l'une quelconque des revendications précédentes, **caractérisé en ce que** ledit au moins un fichier qui comprend ladite au moins une information (14, 16, 18, 20) imprimée sur l'emballage (10) est mis à disposition par ripping en ligne pour une opération d'impression.

6. Procédé au moins selon la revendication 1, **caractérisé en ce que** ledit au moins un élément de référence (22) permet de sélectionner de manière au moins substantiellement automatique le fichier comprenant ladite au moins une information (14, 16, 18, 20) parmi au moins deux fichiers comprenant respectivement au moins une information différente.

7. Dispositif d'impression pour exécuter le procédé selon l'une quelconque des revendications précédentes, comprenant
au moins une unité d'impression (12) comprenant ledit au moins élément d'impression,
au moins un capteur (24) pour détecter une orientation de l'emballage (10),
au moins une unité de calcul (26), et
au moins une unité d'alignement (28) prévue pour effectuer un alignement d'au moins une information (14, 16, 18, 20) pour compenser un écart de l'orientation de l'emballage (10) par rapport à une position de consigne spécifiée et pour obtenir un résultat d'impression précis.

8. Dispositif selon la revendication 7, **caractérisé en ce que** ledit au moins un capteur (24) comprend au moins un capteur optique.

9. Dispositif selon la revendication 8, **caractérisé en ce que** ledit au moins un capteur optique comprend une caméra (30).

10. Dispositif selon l'une quelconque des revendications 7 à 9, **caractérisé en ce que** ladite au moins une unité de calcul (26) est prévue pour calculer une orientation de l'emballage (10) à l'aide d'une orientation d'au moins un élément de référence (22) de l'emballage (10).
